# EUROPÄISCHE PATENTSCHRIFT

(11) **EP 1 101 668 B1**
(45) Veröffentlichungstag und Bekanntmachung des Hinweises auf die Patenterteilung: **14.07.2004**
(21) Anmeldenummer: 00124127.2
(22) Anmeldetag: 07.11.2000
(51) Int. Cl.: B60R 22/46, B60R 21/01

(54) **Zünder**
Igniter
Allumeur

(30) Priorität: 22.11.1999 AT 197799
(43) Veröffentlichungstag der Anmeldung: 23.05.2001
(73) Patentinhaber: Hirschmann Automotive GmbH, 6830 Rankweil-Brederis (AT)
(72) Erfinder: Schmid, Martin, 6820 Frastanz (AT); Fabing, Helmut, 6830 Rankweil (AT)
(74) Vertreter: Hefel, Herbert, Dipl.-Ing.

(56) Entgegenhaltungen:
- EP-A- 0 805 073
- WO-A-00/50273
- US-A- 5 556 132
- PATENT ABSTRACTS OF JAPAN vol. 1996, no. 10, 31. Oktober 1996 (1996-10-31) & JP 08 156735 A (DAICEL CHEM IND LTD), 18. Juni 1996 (1996-06-18)

## Beschreibung

Die Erfindung betrifft einen Zünder zum Auslösen eines Rückhaltemittels, insbesondere Gurtstraffers oder Airbags, in einem Kraftfahrzeug, der ein Zündergehäuse bzw. einen Zünderkörper, eine im Bereich seines vorderen Endes angeordnete Anzündeinrichtung, wie eine Zündpille oder einen in einer mit Pulver befüllten Pulverkammer angeordneten Zündwiderstand, sowie eine Energieübertragungseinrichtung umfaßt, die von einem rückseitigen, der Anzündeinrichtung gegenüberliegenden Bereich des Zünders bis zur Anzündeinrichtung reicht und durch die die Anzündeinrichtung bei einer im rückseitigen Bereich des Zünders auftretenden Erhitzung, insbesondere im Brandfall, auslösbar ist.

Ein Zünder zum Auslösen eines Rückhaltemittels ist beispielsweise aus der DE 196 10 799 C1 bekannt. Bei diesem Zünder ist ein Träger vorgesehen, mit dem Zündanschlußstifte zur Aufnahme eines Zündelements verbunden sind und der mit elektronischen Bauteilen, wie einer integrierten Schaltung, bestückt ist. Der Träger kann als "MID"-Teil (MID - "molded interconnect device") ausgebildet sein. Ein solcher Teil wird beispielsweise durch zwei unterschiedliche Kunststoffkomponenten gebildet, die in einem zweistufigen Spritzgußverfahren aneinander angespritzt sind. Von diesen beiden Kunststoffkomponenten ist die Oberfläche der einen Komponente mittels eines elektrochemischen Galvanisierungsverfahrens mit einer Metallisierung versehbar, während die Oberfläche der anderen Komponente keine derartige Metallisierung annimmt. Über eine entsprechende Ausbildung der Anordnung der beiden Kunststoffkomponenten können über eine solche galvanische Metallisierung Leiterbahnen für in einem weiteren Schritt aufzubringende elektronische Bauteile ausgebildet werden.

Auch andere Verfahren zur Herstellung von MID-Trägern sind bekannt, z. B. sogenannte "Fotoimaging-Techniken" oder "Film-Techniken". Diese Techniken sind beispielsweise in den Proceedings of 3. International Congress "Molded Interconnect Devices", 23. - 24.09.98, Erlangen, Germany (ISBN 3-87525-111-3) beschrieben. Jeweils werden an gespritzten Grundkörpern Leiterbahnen angeordnet.

In der AT 000 522 U1 ist weiters ein in eine Antriebsvorrichtung eines Rückhaltemittels eingebauter Zünder der eingangs genannten Art gezeigt. Der Zünder weist ein Zündköpfchen auf, welches in einen Gasgenerator eingebaut ist, d. h. in eine mit einer Treibladung gefüllte Kammer der Antriebsvorrichtung reicht. Zur Verhinderung von Fehlzündungen weist der Zünder elektronische Bauteile, insbesondere Induktivitäten, auf. Bei diesen Bauteilen handelt es sich um relativ robuste Bauteile im Gegensatz zu empfindlicheren Halbleiter-Bauelementen, wie beispielsweise integrierten Schaltkreisen.

Aus der US-PS 5,556,132 ist weiters ein Zünder der eingangs genannten Art bekannt. Bei diesem ist eine Einrichtung vorgesehen, durch die im Brandfall gewährleistet wird, daß auch im Falle einer Erhitzung des Zünders in seinem rückseitigen, der Anzündeinrichtung abgewandten Bereich die Anzündeinrichtung ausgelöst wird, bevor das Gehäuse durch die Erhitzung instabil wird. Andernfalls wäre eine unkontrollierte Auslösung der Anzündeinrichtung die Folge, wobei auch Teile des instabil gewordenen Gehäuses weggeschleudert werden könnten. Diese Einrichtung umfaßt einen Stift, der aus der Rückseite des Gehäuses ragt und sich durch das Gehäuse bis zu einer mit Treibladung gefüllten Kammer im Bereich des vorderen Endes des Zünders erstreckt. Über einen Teil seiner Länge ist dieser Stift, ausgehend von der mit Treibladung gefüllten Kammer, mit einer Bohrung versehen, in der ein Frühzündpulver vorgesehen ist. Durch Wärmeübertragung des aus dem Gehäuse ragenden Teils des Stiftes auf das Frühzündpulver wird dieses bei Überschreitung seiner Zündtemperatur gezündet, wodurch die Auslösung des Zünders erfolgt. Nachteilig bei diesem Zünder ist insbesondere die durch den Stift gegebene, leitende Verbindung bis in die Pulverkammer. Es kann dadurch die Gefahr eines Stromflusses durch den Stift und eines Funkenschlages im Bereich der Treibladung nicht ausgeschlossen werden, wodurch eine unzulässige Auslösung des Zünders erfolgen kann. Beispielsweise kann ein solcher Stromfluß durch eine elektrostatische Entladung hervorgerufen werden oder auch dadurch, daß das aus dem Gehäuse ragende Ende des Stifts mit einer Spannung in Berührung kommt, beispielsweise falls auf das Fahrzeugchassis im Laufe einer Reparaturarbeit eine Spannung zu liegen kommt.

Aus der DE 195 31 666 A1 ist weiters ein Gasgenerator mit einer Frühzündeinrichtung für den Erhitzungsfall bekannt, wobei ein in der Pulverkammer des Gasgenerators angeordneter, mit einem Frühzündpulver gefüllter Behälter vorgesehen ist, der in engem thermischem Flächenkontakt sowohl mit dem Oberteil des Gasgeneratorgehäuses als auch mit dem entgegengesetzt gegenüberliegenden Unterteil steht. Der Zünder dieses Gasgenerators ist dabei in herkömmlicher Weise aufgebaut.

Ein weiterer Gasgenerator mit einer Frühzündeinrichtung ist aus der US-PS 5,468,017 bekannt. Bei diesem ist ein Frühzündpulver im Bereich der rückseitigen Wandung des Gasgeneratorgehäuses angeordnet. Der Zünder des Gasgenerators ist dabei wiederum in herkömmlicher Weise aufgebaut.

Aus der US-PS 5,429,386 ist weiters eine relativ kompliziert aufgebaute, mechanische Zündeinrichtung für den Fall des Auftretens unzulässig hoher Temperaturen gezeigt.

Aufgabe der Erfindung ist es, einen verbesserten Zünder der eingangs genannten Art bereitzustellen, der bei einem relativ einfachen Aufbau einerseits eine hohe Sicherheit im Brandfall aufweist, andererseits auch gegenüber auftretenden elektrostatischen Entladungen oder unzulässigen Spannungen auf dem Fahrzeugchassis unempfindlich ist. Erfindungsgemäß gelingt diese dadurch, daß die Energieübertragungseinrichtung im Inneren des an der Außenseite isolierend ausgebildeten Zündergehäuses oder Zünderkörpers liegt, wobei sie zumindest im Bereich der Rückseite des Zünders nahe, vorzugsweise näher als 1 mm, an die äußere Oberfläche des Zünderkörpers oder Zündergehäuses reicht.

Bei einer Erhitzung der Rückseite des Zünders im Brandfall wird nach Abschmelzen der dünnen, den rückseitigen Bereich der Energieübertragungseinrichtung überdeckenden Schicht von der Energieübertragungseinrichtung Energie zur Anzündeinrichtung übertragen. Dadurch erfolgt die Auslösung des Zünders rechtzeitig vor dem Instabilwerden des Zündergehäuses bzw. Zünderkörpers.

Eine Energieübertragungseinrichtung könnte durch ein Wärmeleitelement oder beispielsweise auch über eine pyrotechnische Einrichtung, wie eine Zündschnur oder einen mit pyrotechnischem Material gefüllten Hohlraum, welche vom rückseitigen Bereich des Zünders bis zur Anzündeinrichtung reicht, realisiert werden.

Bei einem vorteilhaften Ausführungsbeispiel der Erfindung weist der Zünder einen MID-Träger für die elektronischen Bauteile auf, der mit metallisierten Leiterbahnen zur Verbindung der elektronischen Bauteile versehen ist, wobei die Wärmeleiteinrichtung zumindest einen metallisierten Bereich des MID-Trägers umfaßt bzw. von zumindest einem metallisierten Bereich des MID-Trägers gebildet wird.

Weitere Vorteile und Einzelheiten der Erfindung werden im folgenden anhand der beiliegenden Zeichnung erläutert. In dieser zeigen:
Die Figuren 1 bis 8 schematische Längsschnitte durch unterschiedliche Ausführungsformen der Erfindung;
die Figuren 9 bis 11 schematische Längsschnitte durch weitere Ausführungsformen der Erfindung unter Verwendung von MID-Trägern;
die Figuren 12 bis 15 eine perspektivische Darstellung von schräg oben, eine Rückansicht, eine Draufsicht und eine Vorderansicht eines Ausführungsbeispiels der Erfindung unter Verwendung eines MID-Trägers in einem teilweise gefertigten Zustand;
die Figuren 16 bis 18 weitere Fertigungsschritte des in den Figuren 12 bis 15 gezeigten Ausführungsbeispiels in einer perspektivischen Darstellung entsprechend Fig. 12.

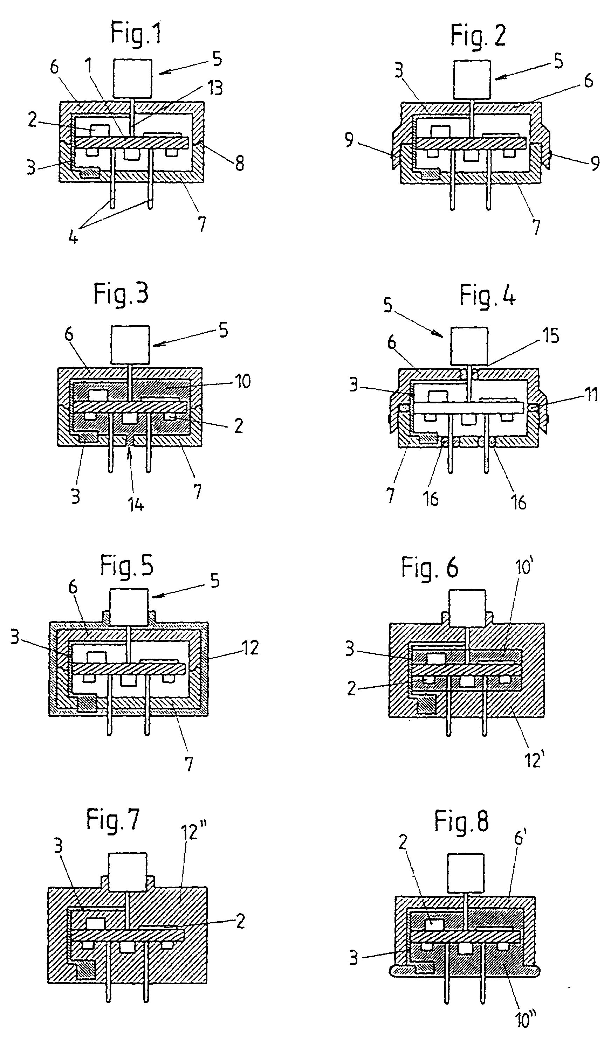

Der in Fig. 1 gezeigte Zünder weist ein Kunststoffgehäuse auf mit einem schalenförmigen Gehäusevorderteil 6 und einem schalenförmigen, rückseitigen Gehäuseteil 7, die über eine Schweißnaht 8 miteinander verbunden sind. Im Inneren des Gehäuses ist eine Platine 1 als Träger für elektronische Bauteile vorgesehen, von denen eines mit dem Bezugszeichen 2 versehen ist. An der Platine sind weiters Anschlußstifte 4 angeordnet und elektrisch mit den Bauteilen 2 entsprechend kontaktiert, welche an der Rückseite des Zünders aus dem rückseitigen Gehäuseteil 7 ragen und zur elektrischen Kontaktierung des Zünders dienen. Die elektronischen Bauteile 2 umfassen bevorzugterweise eine Buselektronik unter Verwendung von integrierten Schaltkreisen und über die Anschlußstifte kann nicht nur die Energieversorgung des Zünders, sondern es können auch von der Buselektronik zu verarbeitende Steuerbefehle zum Auslösen des Zünders übertragen werden.

Weiters sind mit der Platine 1 bzw. den darauf angeordneten Leiterbahnen die Anschlußdrähte 13 einer Zündpille 5 verbunden. Diese ragen auf der Vorderseite des Gehäuses aus dem Gehäusevorderteil 6 und tragen den außerhalb des Gehäuses angeordneten Kopf der Zündpille 5. Im eingebauten Zustand des Zünders in eine Antriebsvorrichtung eines Rückhaltemittels in einem Kraftfahrzeug ragt der Kopf der Zündpille 5 in eine mit einer Treibladung gefüllte Kammer, welche durch Zündung der Zündpille 5 ausgelöst werden kann.

Im Inneren des Gehäuses ist eine Wärmeleiteinrichtung 3 in Form eines metallischen Stiftes vorgesehen, welche vom rückseitigen Bereich des Zünders auf der Innenseite des Gehäuses bis zu einem Anschlußdraht 13 der Zündpille verläuft und mit diesem in Berührung steht. Im Bereich seines rückseitigen Endes weist der die Wärmeleiteinrichtung 3 bildende Stift einen verdickten Bereich auf, der vorzugsweise über einen Großteil der Tiefe des Gehäuses (senkrecht zur Schnittebene von Fig. 1) verläuft. In diesem Bereich des rückseitigen Endes der Wärmeleiteinrichtung 3 weist der Gehäuseteil 7 eine verringerte Wandstärke auf, wobei die Wärmeleiteinrichtung 3 bis nahe zur Außenseite des Gehäuseteils 7 verläuft. Die verbleibende Dicke der Kunststoffschicht zwischen hinterem Ende der Wärmeleiteinrichtung und der Außenseite des Gehäuses beträgt vorzugsweise weniger als 1 mm. Denkbar und möglich wäre es auch, daß sich die Wärmeleiteinrichtung in ihrem rückseitigen Bereich um die Anschlußstifte 4 herum bis zur in Abbildung 1 rechts dargestellten Seite des Gehäuses erstreckt.

Sollte im Brandfall, beispielsweise bei einem Unfall während des Transports des Zünders, zunächst die Rückseite des Gehäuses erhitzt werden, so schmilzt dieses zunächst oberflächlich, bis die den rückseitigen Bereich der Wärmeleiteinrichtung überdeckende Schicht weggeschmolzen ist. In der Folge wird die an der Gehäuserückseite herrschende hohe Temperatur über die Wärmeleiteinrichtung 3 zum Anschlußdraht 13 der Zündpille und weiter zum Kopf der Zündpille übertragen, so daß eine Zündung der Zündpille erfolgt, bevor das Gehäuse durch dessen Erhitzung an der Rückseite derart instabil geworden ist, daß es bei einer Zündung der Zündpille 5 auseinanderbricht und Teile von ihm fortgeschleudert werden.

Das in Fig. 2 gezeigte Ausführungsbeispiel entspricht dem in Fig. 1 dargestellten, wobei die beiden Gehäuseteile 6 und 7 über einen Rastverschluß, der federelastische Zungen 9 umfaßt, ineinander eingeschnappt werden.

Das in Fig. 3 dargestellte Ausführungsbeispiel entspricht wiederum dem Ausführungsbeispiel von Fig. 1, wobei über eine Einfüllöffnung 14 eine Vergußmasse 10 in das Gehäuse eingebracht wird, welche die elektronischen Bauteile 2 schützt und die mechanische Stabilität des Zünders erhöht.

Bei dem Ausführungsbeispiel von Fig. 4 sind zusätzlich zu dem in Fig. 2 gezeigten eine Dichtung 11 zwischen dem Gehäusevorderteil 6 und dem rückseitigen Gehäuseteil 7, Dichtungen 15 zwischen Anschlußdrähten 13 der Zündpille 5 und Gehäusevorderteil 6 sowie Dichtungen 16 zwischen den Anschlußstiften 4 des Zünders und dem rückseitigen Gehäuseteil 7 vorgesehen. Diese Dichtungen 11, 15, 16 dienen zum Schutz der elektronischen Bauteile gegenüber dem Eindringen von Feuchtigkeit.

Bei dem in Fig. 5 gezeigten Ausführungsbeispiel ist zusätzlich zu dem Ausführungsbeispiel nach Fig. 1 das durch Gehäusevorderteil 6 und rückseitigem Gehäuseteil 7 gebildete Gehäuse mit einer Umspritzung 12 versehen, welche auch den rückseitigen Teil des Kopfes der Zündpille 5 umgibt. Der rückseitige Bereich der Wärmeleiteinrichtung 3 tritt bei diesem Ausführungsbeispiel durch den rückseitigen Gehäuseteil 7 und steht über diesen etwas vor, so daß er nur von einer dünnen Schicht, vorzugsweise dünner als 1 mm, der Umspritzung 12 überdeckt wird. Im Brandfall wird nach Abschmelzen dieser dünnen, den rückseitigen Bereich der Wärmeleiteinrichtung überdeckenden Schicht die dort herrschende hohe Temperatur wiederum zu den Anschlußdrähten 13 und in der Folge zum Kopf der Zündpille 5 übertragen. Die Umspritzung 12 dient wiederum insbesondere zum Schutz gegenüber einem Eindringen von Feuchtigkeit und weiters auch zur Erhöhung der mechanischen Stabilität.

Im Ausführungsbeispiel nach Fig. 6 ist die Platine 1 zusammen mit den elektronischen Bauteilen 2 in einer Vergußmasse 10' eingebettet. Diese Vergußmasse wird anschließend mit einer Umspritzung 12' umgeben, welche ein Gehäuse bildet und in der weiters die Wärmeleiteinrichtung 3 eingebettet ist und wiederum bis nahe an die rückseitige äußere Oberfläche dieses Gehäuses reicht.

Wenn die mechanische und/oder thermische Stabilität der elektronischen Bauteile 2 dies zuläßt, kann auch eine Vergußmasse weggelassen werden und die Platine 1 zusammen mit den elektronischen Bauteilen 2 direkt mit einer Umspritzung 12" umgeben werden, in der wiederum eine Wärmeleiteinrichtung 3 in Form eines metallischen Stiftes eingebettet ist (vgl. Fig. 7). Zur Schonung der elektronischen Bauteile 2 kann hierbei ein sogenanntes Niederdruck-Spritzverfahren angewendet werden.

Bei dem in Fig. 8 gezeigten Ausführungsbeispiel ist ein schalenförmiges Gehäusevorderteil 6'vorgesehen, dessen Seitenwände sich seitlich über die Platine und die darauf angeordneten elektronischen Bauteile 2 erstrecken. Das Gehäusevorderteil 6 ist mit einer Vergußmasse 10" befüllt, wobei sich eine in die Vergußmasse eingebettete Wärmeleiteinrichtung 3 bis nahe an die rückseitige Oberfläche der Vergußmasse 10 erstreckt.

Anstelle einer Platine könnte auch ein anderer Schaltungsträger, beispielsweise ein Keramikträger, auch Hybrid genannt, oder ein Stanzgitter vorgesehen sein. Anstelle eines Wärmeleitelementes in Form eines Metallstabes könnte beispielsweise auch ein Wärmeleitelement vorgesehen sein, welches von einem wärmeleitenden Kunststoffteil gebildet wird.

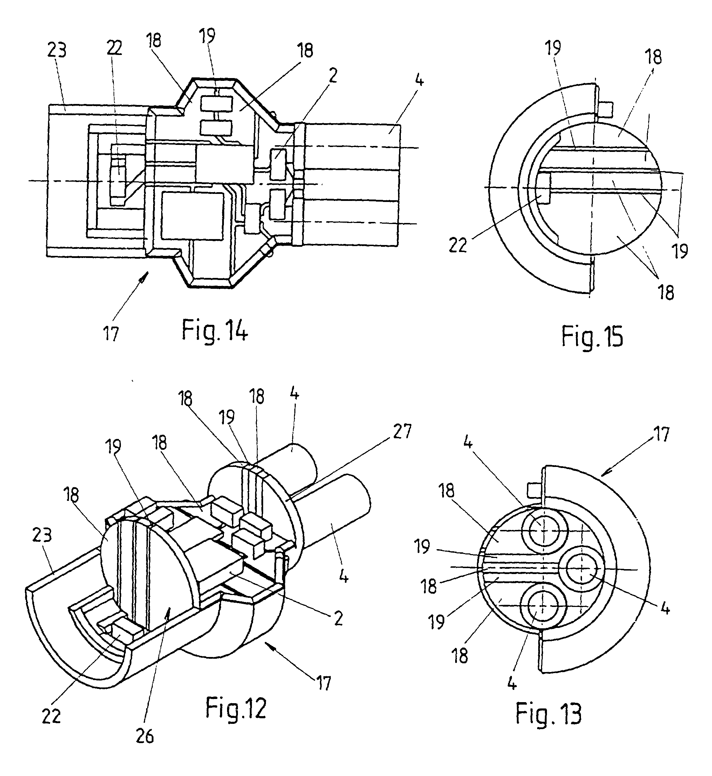

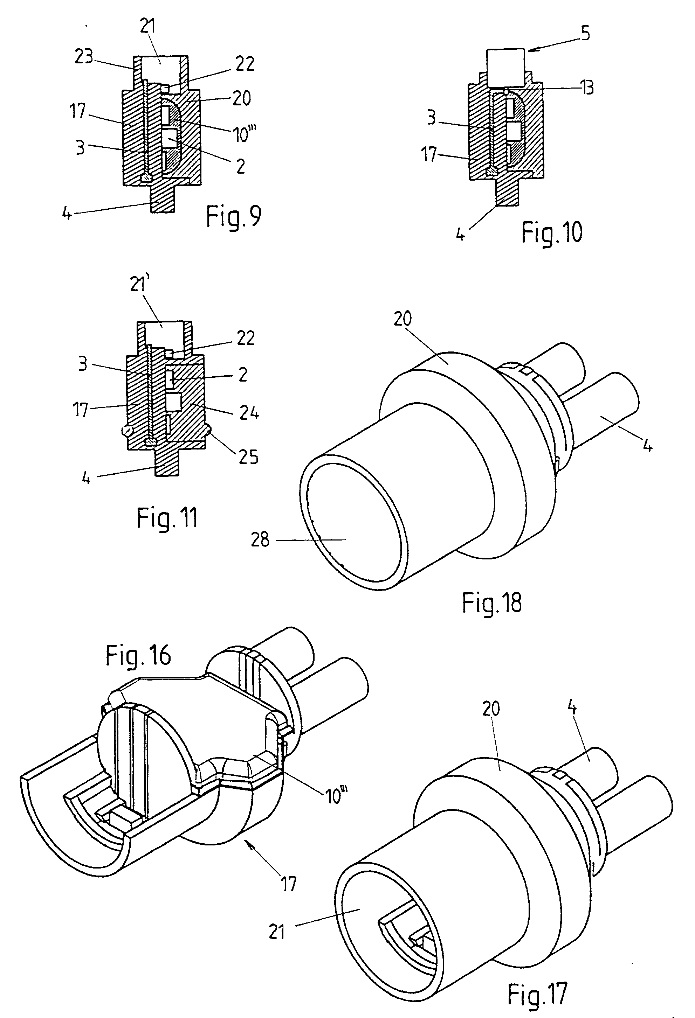

Bei den in den Figuren 9 bis 18 dargestellten Ausführungsbeispielen wird der Zünder unter Verwendung eines MID-Trägers hergestellt. Bei der Herstellung eines solchen Trägers wird beispielsweise in einem zweistufigen Spritzgußverfahren an einem Grundkörper aus einer ersten Kunststoffkomponente eine zweite Kunststoffkomponente angespritzt, wobei eine dieser beiden Kunststoffkomponenten über einen elektrochemischen Galvanisierungsprozeß mit einer Metallisierung versehbar ist. Eine Reihe solcher galvanisierter bzw. metallisierter Bereiche, von denen einige mit dem Bezugszeichen 18 bezeichnet sind, sind in den Figuren ersichtlich und werden durch isolierende Bereiche 19 voneinander getrennt. Die metallisierten Bereiche 18 bilden insbesondere Leiterbahnen aus, welche die elektronischen Bauelemente 2 kontaktieren und untereinander entsprechend verbinden. Dazwischen liegen isolierende Bereiche 19, die von der Oberfläche der galvanisch nicht metallisierbaren Kunststoffkomponente gebildet werden.

Bei dem in Fig. 9 dargestellten Ausführungsbeispiel werden die auf dem MID-Träger angeordneten Bauelemente 2 in einer Vergußmasse 10"' eingebettet. Anschließend wird zur Fertigstellung des Zünders eine weitere Kunststoffkomponente 20 aufgespritzt. Der MID-Träger weist an seiner Vorderseite einen Fortsatz 23 auf, der einen Teil der Wandung einer Pulverkammer 21 bildet. In dieser Pulverkammer 21 ist auf dem MID-Träger ein Zündwiderstand 22 in der Form eines Widerstandsdrahtes angeordnet, über den in der Pulverkammer 21 eingebrachtes Pulver zündbar ist. Nach Einbringung des Pulvers (in den Figuren nicht dargestellt) in die Pulverkammer 21 wird diese an ihrer Vorderseite mit einer Membran verschlossen. Weiters ist im MID-Träger eine Wärmeleiteinrichtung 3 in der Form eines Metallstiftes angeordnet, dessen vorderes Ende in die Pulverkammer reicht und dessen rückseitiges Ende bis nahe zum rückseitigen Ende des MID-Trägers verläuft. Am rückseitigen Ende des MID-Trägers sind weiters einstückig mit dem MID-Träger ausgebildete Anschlußstifte 4 vorgesehen, die mit Metallisierungen versehen sind und über durch Metallisierungen gebildete Leiterbahnen mit den elektronischen Bauteilen 2 entsprechend verbunden sind. Weiters wäre es auch denkbar und möglich, anstelle von einstückig mit dem MID-Träger ausgebildeten Anschlußstiften separate, beispielsweise eingepreßte oder eingelötete Anschlußstifte vorzusehen.

Der in Fig. 10 dargestellte Zünder weist im Gegensatz zu dem in Fig. 9 dargestellten Zünder eine Zündpille 5 auf, deren Anschlußdrähte 13 mit einem metallisierten Bereich des MID-Trägers verbunden sind. Eine Wärmeleiteinrichtung 3 in Form eines metallischen Stiftes reicht von einem Anschlußdraht 13, mit dem dieser Stift in Berührung steht, bis in die Nähe des rückseitigen Endes des MID-Trägers.

Der in Fig. 11 dargestellte Träger weist eine Pulverkammer 21' auf, deren seitliche und rückseitige Wandungen hier vollständig vom MID-Träger gebildet werden. In diese Pulverkammer 21' reicht wiederum das vordere Ende einer Wärmeleiteinrichtung 3 in Form eines Metallstiftes. An den MID-Träger ist eine Kunststoffweichkomponente 24 angespritzt. Diese Kunststoffweichkomponente 24 bildet eine an der Außenseite des Zünders umlaufende, ringförmige Wulst 25, welche eine Dichtung darstellt, wenn der Zünder in einen zylindrischen Stutzen einer Antriebsvorrichtung eines Rückhaltemittels in einem Kraftfahrzeug eingeschoben wird. Da eine solche Kunststoffweichkomponente in einem Niederdruck-Spritzgießverfahren aufgebracht werden kann, kann hier ein vorhergehendes Vergießen der elektronischen Bauteile 2 entfallen.

Bei dem in den Figuren 12 bis 18 dargestellten Ausführungsbeispiel ist der MID-Träger mit einer großflächigen Metallisierung versehen. Unter großflächiger Metallisierung wird hier verstanden, daß die galvanisch metallisierten Bereiche 18 eine wesentlich größere Fläche der Oberfläche des MID-Trägers einnehmen als die dazwischenliegenden isolierenden Bereiche 19. Vorzugsweise werden mehr als 80 % der Fläche der Oberseite des MID-Trägers von einer solchen großflächigen Metallisierung eingenommen. Diese großflächig metallisierten Bereiche besitzen ein hohes Wärmeleitvermögen und bilden in ihrer Gesamtheit eine Wärmeleiteinrichtung, welche sich vom rückseitigen Bereich des Zünders bis in die Pulverkammer bzw. bis zu den Anschlußdrähten einer Zündpille erstreckt.

Besonders günstig ist es, wenn als Wärmeleiteinrichtung oder Teil der Wärmeleiteinrichtung ein metallisierter Bereich vorgesehen wird, der sich durchgehend von einem rückseitigen Bereich des Zünders bis in die Pulverkammer bzw. zu einem der Anschlußdrähte einer Zündpille erstreckt (nicht dargestellt in den Figuren 12 bis 18). Ein solcher durchgehender Bereich sollte sich nicht unisoliert auf die Außenseite des fertiggestellten Zünders erstrecken, um nicht die Gefahr von Fehlzündungen des Zünders mit sich zu bringen. Wenn dieser durchgehende, metallisierte Bereich sich daher bis auf die Rückseite der Rückwand 27 des MID-Trägers erstreckt, wird diese Rückwand an ihrer Rückseite günstigerweise ebenfalls mit der weiteren Kunststoffkomponente 20 umspritzt, so daß die Metallisierung mit einer dünnen Schicht dieser Kunststoffkomponente überzogen wird. Dieser durchgehende Bereich der Metallisierung kann auch zumindest bereichsweise an der Seiten- bzw. Unterfläche des MID-Trägers verlaufen, wobei diese Bereiche in der Folge ebenfalls mit der weiteren Kunststoffkomponente 20 umspritzt werden

Die im Ausführungsbeispiel nach den Figuren 12 bis 18 vom MID-Träger gebildete Rückwand 26 der Pulverkammer 21 wird auf ihrer der Pulverkammer 21 zugewandten Seite ebenfalls mit einer großflächigen Metallisierung versehen. Da Kunststoff Feuchtigkeit aufnehmen und wiederum ausdiffundieren kann, ein solches Ausdiffundieren durch eine aufgalvanisierte Schicht jedoch verhindert wird, wird dadurch ein Schutz der Pulverkammer vor einer Diffusion von Feuchtigkeit vom hinteren Ende des Zünders bis in die Pulverkammer erreicht. Als weiterer Schutz gegenüber einer Diffusion von Feuchtigkeit in der Längsrichtung des Zünders ist die Rückwand 27 des Zünders, an der die Anschlußstifte 4 angeordnet sind, zumindest an ihrer Innenseite und/oder Außenseite ebenfalls mit einer großflächigen Metallisierung versehen.

Der Aufbau und die Fertigstellung des in den Figuren 12 bis 18 dargestellten Zunders entspricht im wesentlichen dem in Fig. 9 gezeigten Ausführungsbeispiel. Nach dem Spritzen, der galvanischen Metallisierung und der Bestückung des MID-Trägers werden die elektronischen Bauteile 2 in einer Vergußmasse 10"' eingebettet und anschließend der MID-Träger und die Vergußmasse mit der weiteren Kunststoffkomponente 20 umspritzt. Die Pulverkammer 21 wird mit Pulver befüllt und an ihrer Vorderseite mit einer Membran 28 verschlossen. Eine Wärmeleiteinrichtung 3 in Form eines Metallstabes, wie diese in Fig. 9 ersichtlich ist, kann bei dem in den Figuren 12 bis 18 dargestellten Ausführungsbeispiel zusätzlich zur durch die großflächige Metallisierung ausgebildeten Wärmeleiteinrichtung vorgesehen sein.

Zusätzlich oder anstelle eines Wärmeleitelementes könnte bei allen gezeigten Ausführungsbeispielen weiters als Energieübertragungseinrichtung auch ein pyrotechnisches Element vorgesehen sein. Dieses könnte von einer Zündschnur oder von einer mit pyrotechnischem Material gefüllten Kammer, welche sich jeweils vom rückseitigen Bereich des Zünders bis in den Bereich der Anzündeinrichtung erstrecken, gebildet werden. Als pyrotechnisches Material kann ein zündfähiges Pulver oder auch ein aushärtendes flüssiges pyrotechnisches Material verwendet werden.

### Legende

### zu den Hinweisziffern:

- 1: Platine
- 2: elektronischer Bauteil
- 3: Wärmeleiteinrichtung
- 4: Anschlußstift
- 5: Zündpille
- 6, 6': Gehäusevorderteil
- 7: rückseitiger Gehäuseteil
- 8: Schweißnaht
- 9: Zunge
- 10,10' 10", 10''': Vergußmasse
- 11: Dichtung
- 12, 12', 12": Umspritzung
- 13: Anschlußdraht
- 14: Einfüllöffnung
- 15: Dichtung
- 16: Dichtung
- 17: MID-Träger
- 18: metallisierter Bereich
- 19: isolierender Bereich
- 20: Kunststoffkomponente
- 21, 21': Pulverkammer
- 22: Zündwiderstand
- 23: Fortsatz
- 24: Kunststoffweichkomponente
- 25: Wulst
- 26: Rückwand
- 27: Rückwand
- 28: Membran

## Patentansprüche

1. Zünder zum Auslösen eines Rückhaltemittels, insbesondere Gurtstraffers oder Airbags, in einem Kraftfahrzeug, der ein Zündergehäuse bzw. einen Zünderkörper, eine im Bereich seines vorderen Endes angeordnete Anzündeinrichtung, wie eine Zündpille oder einen in einer mit Pulver befüllten Pulverkammer angeordneten Zündwiderstand, sowie eine Energieübertragungseinrichtung umfaßt, die von einem rückseitigen, der Anzündeinrichtung gegenüberliegenden Bereich des Zünders bis zur Anzündeinrichtung reicht und durch die die Anzündeinrichtung bei einer im rückseitigen Bereich des Zünders auftretenden Erhitzung, insbesondere im Brandfall, auslösbar ist, **dadurch gekennzeichnet, daß** die Energieübertragungseinrichtung im Inneren des an der Außenseite isolierend ausgebildeten Zündergehäuses oder Zünderkörpers liegt, wobei sie zumindest im Bereich der Rückseite des Zünders nahe, vorzugsweise näher als 1 mm, an die äußere Oberfläche des Zünderkörpers oder Zündergehäuses reicht.

2. Zünder nach Anspruch 1, **dadurch gekennzeichnet, daß** die Energieübertragungseinrichtung als Wärmeleiteinrichtung (3, 18) ausgebildet ist.

3. Zünder nach Anspruch 1 oder Anspruch 2, **dadurch gekennzeichnet, daß** eine Energieübertragungseinrichtung in Form eines pyrotechnischen Elementes, vorzugsweise eine Zündschnur oder eine mit pyrotechnischem Material befüllte Kammer, vorgesehen ist.

4. Zünder nach einem der Ansprüche 1 bis 3, **dadurch gekennzeichnet, daß** die Energieübertragungseinrichtung mit einem Teil der Anzündeinrichtung (5, 21, 21', 22) in Berührung steht.

5. Zünder nach Anspruch 4, **dadurch gekennzeichnet, daß** die Energieübertragungseinrichtung (3, 18) mit einem Anschlußdraht (13) des Zündwiderstandes (22) der Anzündeinrichtung in Berührung steht.

6. Zünder nach Anspruch 4 oder Anspruch 5, **dadurch gekennzeichnet, daß** die Energieübertragungseinrichtung in die Pulverkammer (21, 21') der Anzündeinrichtung reicht.

7. Zünder nach Anspruch 4 oder Anspruch 5, **dadurch gekennzeichnet, daß** die Energieübertragungseinrichtung mit dem Kopf der Zündpille (5) in Berührung steht.

8. Zünder nach einem der Ansprüche 1 bis 7, **dadurch gekennzeichnet, daß** die Wärmeleiteinrichtung (3) von einem Metallstift gebildet wird.

9. Zünder nach einem der Ansprüche 2 bis 8, **dadurch gekennzeichnet, daß** ein MID-Träger (17) für die elektronischen Bauteile (2) vorgesehen ist, der metallisierte Leiterbahnen zur Verbindung der elektronischen Bauteile (2) aufweist, wobei die Wärmeleiteinrichtung zumindest einen metallisierten Bereich (18) des MID-Trägers (17) umfaßt bzw. von zumindest einem metallisierten Bereich (18) des MID-Trägers gebildet wird.

10. Zünder nach Anspruch 9, **dadurch gekennzeichnet, daß** die Wärmeleiteinrichtung einen durchgehenden, vom Bereich des rückseitigen Endes des Zünders bis in die Pulverkammer (21, 21') oder zu einem Anschlußdraht des Zündwiderstandes (22) oder der Zündpille (5) reichenden metallisierten Bereich (18) aufweist.

11. Zünder nach einem der Ansprüche 9 oder 10, **dadurch gekennzeichnet, daß** die Fläche der metallisierten Bereiche (18) des MID-Trägers wesentlich größer als die Fläche der dazwischenliegenden isolierenden Bereiche (19) ist.

12. Zünder nach einem der Ansprüche 9 bis 11, **dadurch gekennzeichnet, daß** der MID-Träger an seinem rückseitigen Ende zumindest einen einstückig mit dem MID-Träger (17) ausgebildeten Anschlußstift (4) aufweist, der eine Metallisierung aufweist.

13. Zünder nach einem der Ansprüche 9 bis 12, **dadurch gekennzeichnet, daß** der MID-Träger (17) die vorzugsweise scheibenförmig ausgebildete Rückwand (26) der Pulverkammer (21, 21') bildet, deren der Pulverkammer (21, 21') zugewandte und/oder der Pulverkammer abgewandte Oberfläche zum Großteil, vorzugsweise zu mehr als 80 %, mit einem metallisierten Bereich (18) versehen ist.

14. Zünder nach einem der Ansprüche 9 bis 13, **dadurch gekennzeichnet, daß** die metallisierten Bereiche (18) in an sich bekannter Weise galvanisch metallisiert sind.

15. Zünder nach einem der Ansprüche 1 bis 14, **dadurch gekennzeichnet, daß** der Zünder elektronische Bauteile umfaßt.

## Claims

1. An igniter for activating a restraining means, especially a belt tensioner or an airbag, in a motor vehicle, comprising an igniter casing or igniter body, an ignition device, such as a priming cap or an ignition resistor disposed in a powder chamber filled with powder, arranged in the region of the front end of the igniter, and an energy transfer device which extends from a rear region of the igniter, lying opposite the ignition device, to the ignition device and by means of which the ignition device can be activated when heating occurs in the rear region of the igniter, in particular in the event of fire, **characterised in that** the energy transfer device lies inside the igniter casing or igniter body, formed in an insulating manner on its outside, and, at least in the region of the rear end of the igniter, extends close, preferably closer than 1 mm, to the outer surface of the igniter body or igniter casing.

2. An igniter according to claim 1, **characterised in that** the energy transfer device is formed as a thermal conduction device (3, 18).

3. An igniter according to claim 1 or claim 2, **characterised in that** an energy transfer device in the form of a pyrotechnic element is provided, preferably a detonating fuse or a chamber filled with pyrotechnic material.

4. An igniter according to any one of claims 1 to 3, **characterised in that** the energy transfer device is in contact with part of the ignition device (5, 21, 21', 22).

5. An igniter according to claim 4, **characterised in that** the energy transfer device (3, 18) is in contact with a connecting wire (13) of the ignition resistor (22) of the ignition device.

6. An igniter according to claim 4 or claim 5, **characterised in that** the energy transfer device extends into the powder chamber (21, 21') of the ignition device.

7. An igniter according to claim 4 or claim 5, **characterised in that** the energy transfer device is in contact with the head of the priming cap (5).

8. An igniter according to any one of claims 1 to 7, **characterised in that** the thermal conduction device (3) is formed by a metal pin.

9. An igniter according to any one of claims 2 to 8, **characterised in that** an MID substrate (17) is provided for the electronic components (2) and has metallised conductive tracks for connecting the electronic components (2), the thermal conduction device comprising at least one metallised region (18) of the MID substrate (17) or being formed by at least one metallised region (18) of the MID substrate.

10. An igniter according to claim 9, **characterised in that** the thermal conduction device has a continuous metallised region (18) extending from the region of the rear end of the igniter into the powder chamber (21, 21') or to a connecting wire of the ignition resistor (22) or the priming cap (5).

11. An igniter according to either one of claims 9 and 10, **characterised in that** the surface area of the metallised regions (18) of the MID substrate is substantially larger than the surface area of the insulating regions (19) lying therebetween.

12. An igniter according to any one of claims 9 to 11, **characterised in that** the MID substrate has, at its rear end, at least one connecting pin (4) formed in one piece with the MID substrate (17) and provided with a metal coating.

13. An igniter according to any one of claims 9 to 12, **characterised in that** the MID substrate (17) forms the preferably disc-shaped rear wall (26) of the powder chamber (21, 21'), the surface of the rear wall facing the powder chamber (21, 21') and/or the surface remote from the powder chamber being for the most part, preferably more than 80%, provided with a metallised region (18).

14. An igniter according to any one of claims 9 to 13, **characterised in that** the metallised regions (18) are galvanically metallised in a manner known per se.

15. An igniter according to any one of claims 1 to 14, **characterised in that** the igniter comprises electronic components.

## Revendications

1. Allumeur de déclenchement d'un système de retenue, en particulier de tendeurs de ceinture ou d'airbags dans un véhicule automobile, comprenant un boîtier d'allumeur ou corps d'allumeur, un dispositif d'allumage disposé dans la zone de son extrémité antérieure telle une capsule de mise à feu ou une résistance d'allumage disposée dans une chambre à poudre remplie de poudre, ainsi qu'un dispositif de transmission d'énergie qui s'étend d'une zone postérieure de l'allumeur située en face du dispositif d'allumage jusqu'au dispositif d'allumage et par lequel le dispositif d'allumage est déclenchable lors d'un échauffement se produisant dans la zone postérieure de l'allumeur, en particulier en cas d'incendie,
**caractérisé en ce que**
le dispositif de transmission d'énergie figure à l'intérieur du boîtier d'allumeur ou du corps d'allumeur de côté extérieur constitué de façon isolante, où, au moins dans la zone du côté postérieur de l'allumeur, il parvient à proximité de la surface extérieure du corps d'allumeur ou du boîtier d'allumeur, de préférence à moins d'l mm.

2. Allumeur selon la revendication 1,
**caractérisé en ce que**
le dispositif de transmission d'énergie est constitué en tant que dispositif de conduction de chaleur (3, 18).

3. Allumeur selon la revendication 1 ou la revendication 2,
**caractérisé en ce qu'**
est prévu un dispositif de transmission d'énergie sous la forme d'un élément pyrotechnique, de préférence une mèche d'allumage ou une chambre remplie de matériau pyrotechnique.

4. Allumeur selon l'une quelconque des revendications 1 à 3,
**caractérisé en ce que**
le dispositif de transmission d'énergie est en contact avec une partie du dispositif d'allumage (5, 21, 21', 22).

5. Allumeur selon la revendication 4,
**caractérisé en ce que**
le dispositif de transmission d'énergie (3, 18) est en contact avec un fil de raccordement (13) de la résistance d'allumage (22) du dispositif d'allumage.

6. Allumeur selon la revendication 4 ou la revendication 5,
**caractérisé en ce que**
le dispositif de transmission d'énergie parvient jusqu'à l'intérieur de la chambre à poudre (21, 21') du dispositif d'allumage.

7. Allumeur selon la revendication 4 ou la revendication 5,
**caractérisé en ce que**
le dispositif de transmission d'énergie est en contact avec la tête de la capsule de mise à feu (5).

8. Allumeur selon l'une quelconque des revendications 1 à 7,
**caractérisé en ce que**
le dispositif de conduction de chaleur (3) est constitué d'une tige en métal.

9. Allumeur selon l'une quelconque des revendications 2 à 8,
**caractérisé en ce qu'**
un support MID (17) prévu pour les éléments électroniques (2), présente des pistes conductrices métallisées pour la liaison des éléments électroniques (2), le dispositif de conduction de chaleur comprenant au moins une zone métallisée (18) du support MID (17) ou est formé d'au moins une zone métallisée (18) du support MID (17).

10. Allumeur selon la revendication 9,
**caractérisé en ce que**
le dispositif de conduction de chaleur présente une zone métallisée (18) continue s'étendant de la zone de l'extrémité postérieure de l'allumeur jusque dans la chambre à poudre (21, 21'), ou à un fil de raccordement de la résistance d'allumage (22) ou de la capsule de mise à feu (5).

11. Allumeur selon l'une des revendications 9 ou 10,
**caractérisé en ce que**
la surface de la zone métallisée (18) du support MID (17) est nettement plus grande que la surface isolante (19) interposée.

12. Allumeur selon l'une quelconque des revendications 9 à 11,
**caractérisé en ce que**
le support MID (17) présente en son extrémité postérieure au moins une tige de raccordement (4) constituée de façon monobloc avec le support MID (17) qui présente une métallisation.

13. Allumeur selon l'une quelconque des revendications 9 à 12,
**caractérisé en ce que**
le support MID (17) forme la paroi postérieure (26), constituée de préférence en forme de plaque, de la chambre à poudre (21, 21') dont la surface dirigée vers la chambre à poudre (21, 21') et/ou la surface détournée de la chambre à poudre (21, 21') sont pourvues en majeure partie d'une zone métallisée (18), de préférence sur plus de 80 %.

14. Allumeur selon l'une quelconque des revendications 9 à 13,
**caractérisé en ce que**
la zone métallisée (18) est métallisée galvaniquement de manière connue en elle-même.

15. Allumeur selon l'une quelconque des revendications 1 à 14,
**caractérisé en ce que**
l'allumeur comprend des éléments électroniques.
